**Europäisches Patentamt**

**European Patent Office**

**Office européen des brevets**

(19)

(11) Veröffentlichungsnummer: **0 381 966 B1**

(12)

# EUROPÄISCHE PATENTSCHRIFT

(45) Veröffentlichungstag der Patentschrift: **05.10.94**

(21) Anmeldenummer: **90101044.7**

(22) Anmeldetag: **19.01.90**

(51) Int. Cl.5: **C08G 8/04**, C08L 101/00,
//(C08L101/00;,61:06)

(54) **Verfahren zur Herstellung von Novolaken und deren Verwendung.**

(30) Priorität: **24.01.89 DE 3901930**

(43) Veröffentlichungstag der Anmeldung:
**16.08.90 Patentblatt 90/33**

(45) Bekanntmachung des Hinweises auf die
Patenterteilung:
**05.10.94 Patentblatt 94/40**

(84) Benannte Vertragsstaaten:
**AT BE CH DE ES FR GB GR IT LI LU NL SE**

(56) Entgegenhaltungen:
**EP-A- 0 025 143**
**EP-A- 0 224 911**
**DE-A- 2 700 304**

(73) Patentinhaber: **HOECHST AKTIENGESELL-
SCHAFT**

**D-65926 Frankfurt (DE)**

(72) Erfinder: **Hesse, Wolfgang, Dr.**
**Rossbachhöhe 42**
**D-6204 Taunusstein (DE)**
Erfinder: **Hofmann, Klaus, Dr.**
**Grundstrasse 44**
**D-6507 Ingelheim (DE)**
Erfinder: **Leicht, Erhard, Dr.**
**Kurhausstrasse 56**
**D-6238 Hofheim am Taunus (DE)**

EP 0 381 966 B1

**Beschreibung**

Die Erfindung betrifft ein Verfahren zur Herstellung von Novolaken aus Phenolen bzw. Gemischen verschiedener Phenole mit Oxoverbindungen oder Gemischen von Oxoverbindungen, wobei sich besondere Vorteile bei Verwendung von leicht flüchtigen Oxoverbindungen, insbesondere wäßrigen Formaldehydlösungen, ergeben. Die Novolake werden erhalten durch säurekatalysierte Kondensation der Reaktanten in einem wasserarmen Medium in homogener Phase bei Temperaturen ≧ 110°C.

Es ist bekannt, daß sich Phenole mit Oxoverbindungen in Gegenwart von Katalysatoren, in der Regel in Gegenwart von Säuren, zu Novolaken umsetzen lassen. Von Spezialfällen abgesehen wird Formaldehyd in Form von 30 bis 50 gew.-%igen wäßrigen Lösungen verwendet. Es ist prinzipiell auch möglich, von wasserarmen Lösungen des Formaldehyds in Phenolen, die beispielsweise durch Lösen gasförmigen Formaldehydes oder durch Depolymerisation von Paraformaldehyd in Phenolen hergestellt werden können, auszugehen. Diese Verfahrensweise hat aber den Nachteil, daß die stark exotherme Kondensationsrekation nicht mit der erforderlichen Sicherheit beherrscht werden kann und das Kondensationswasser im Reaktionsgemisch verbleibt.

Die Novolakkondensation ist mit z.B. 98 kJ/Mol Formaldehyd durch erhebliche Exothermie gekennzeichnet. Diese Reaktionswärme muß zur sicheren Durchführung des Prozesses durch Kühlung aufgefangen bzw. abgeführt werden. Zur sicheren Reaktionsführung ist es erforderlich, den Formaldehyd nicht auf einmal, sondern über einen längeren Zeitraum verteilt zuzugeben. Trotzdem kann es zu einem Energiestau kommen und der Reaktor kann kritisch werden.

Die Novolakkondensation vollzieht sich bei den bekannten Methoden nur anfangs in homogener Phase. Mit fortschreitendem Kondensationsgrad trennt sich das Reaktionsmedium in eine organische Harzphase und eine wäßrige Phase. Sind die Phasen bei ihrer Trennung überhitzt, kann es zu gefährlichen Siedeverzügen kommen. Oft wirken beide Faktoren, Energiestau und Überhitzung der Phasen, gemeinsam in der gleichen gefährlichen Richtung. Es kann zu Kesselaushüben, sogar zu Kesselexplosionen kommen. Deshalb besteht aus Sicherheitsgründen die Notwendigkeit, die Reaktion viel langsamer zu führen, als es aus kinetischen Gründen möglich wäre. Bei der üblichen drucklosen Durchführung der Kondensationsreaktion darf daher die Reaktionstemperatur die Siedetemperatur des Wassers, d.h. 100°C, nicht überschreiten, sondern muß einige Grade darunter liegen.

In der Praxis bedeutet das einen erheblichen Zeitverlust bzw. eine wesentlich verringerte Zeitausbeute. Durch die Verwendung von wäßrigem Formaldehyd und das entstehende Kondensationswasser bedingt, ist auch die Raumausbeute gering. Sie beträgt mit Phenol üblicherweise 40 bis 45 %.

In EP-A 0 224 911 wird die Herstellung von hochmolekularen Novolaken durch Reaktion von Phenolen mit Aldehyden in organischen Lösemitteln beschrieben. Das Reaktionswasser verbleibt während der Reaktion im Ansatz.

Als Katalysatoren für die Reaktion werden Säuren benutzt. Bei der geschilderten Verfahrensweise ist es grundsätzlich möglich, preiswerte starke Mineralsäuren, wie z.B. Schwefelsäure, Salzsäure usw., zu verwenden. In dem stark wasserhaltigen Reaktionsmedium können diese Säuren aber zu starken Korrosionen am Reaktormaterial führern, so daß man in der Praxis teuere organische Säuren, wie z.B. Oxalsäure, Trichloressigsäure u.a. verwendet, und zwar in relativ großen Anteilen von ca. 1 Gew.-%, bezogen auf die phenolische Komponente. Die beiden genannten organischen Säurekatalysatoren zersetzen sich später unter den Aufarbeitungsbedingungen im Reaktionsgemisch, so daß sie nicht in die Harzausbeute eingehen. Bei ihrer Zersetzung können außerdem giftige Stoffe entstehen.

Setzt man gegenüber Oxoverbindungen trifunktionelle Phenole als Phenolkomponente für die Novolakbildung nach bekannten Methoden ein, z.B. das Phenol selbst, so muß die Phenolkomponente im Überschuß eingesetzt werden. Die Höhe dieses Überschusses steuert auch den Kondensationsgrad. Beim Abdestillieren der nicht umgesetzten Phenolanteile fällt ein Gemisch der Phenole mit Wasser an, welches sich in zwei Phasen, eine phenolische und eine wäßrige Phase, trennt. Die dem Abwasser zuzuführende wäßrige Phase enthält, je nach Trenntemperatur, 6 bis 8 Gew.-% freies Phenol. Dieses Abwasser muß, z.B. durch Verbrennen oder in einer biologischen Abwasseraufbereitungsanlage, entsorgt werden. Beide Methoden sind sehr kostenaufwendig und die Kosten der biologischen Reinigung richten sich außerdem nach dem Phenolgehalt des Abwassers. Die phenolische Phase des Destillates enthält ca. 20 Gew.-% Wasser und wird üblicherweise wiederverwendet. Dabei muß aber entweder der Wassergehalt berücksichtigt werden und eine weitere Verdünnung der Reaktionspartner beim nächsten Ansatz in Kauf genommen oder aber das Wasser vorher destillativ entfernt werden.

Bei der Kondensationsreaktion zwischen der phenolischen Komponente und Oxoverbindungen entstehen zunächst Phenole mit Methylolgruppen bzw. mit substituierten Methylolgruppen. Diese sind zur weiteren Kondensation mit Phenolen unter Ausbildung von Alkylidenbrücken befähigt und im sauren Medium relativ instabil. Die vollständige Umsetzung dieser reaktiven Gruppen zu Alkylidenbrücken ist aber eine Zeitreaktion, die unter den üblichen Reaktionsbedingungen bei 100°C nicht vollständig abläuft. Wenn nach mehr oder minder vollständigem Verbrauch der Oxoverbindungen das Harz aber anschließend zur Befreiung von nicht umgesetzten Phenolen destilliert wird, dann setzen sich die übriggebliebenen reaktiven Methylolgruppen unter Einfluß der sich steigernden Temperatur zu Alkylidenbrücken um. Durch den Destillationsprozeß verschiebt sich jedoch das den Kondensationsgrad bestimmende Molverhältnis zwischen Oxoverbindung und Phenol. Dadurch tritt Unsicherheit bei der Reproduzierbarkeit des Ansatzes ein. Diese Ungleichmäßigkeiten verstärken sich besonders dann, wenn man anstelle von relativ schnell reagierenden Phenolen, wie z.B. das Phenol selbst, träger reagierende Phenole, insbesondere z.B. Alkylphenole, verwendet. Verwendet man als phenolische Komponente keine einheitlichen Verbindungen, sondern Gemische verschiedener Phenole, die unterschiedlich schnell mit Oxoverbindungen reagieren, dann weicht die Zusammensetzung des Endproduktes nach der Aufarbeitung erheblich von der Zusammensetzung des Ausgangsgemisches ab. Im Extremfall liegen dann Gemische von Homokondensaten vor. Auf jeden Fall entstehen echte Mischkondensate nur in geringerem, den Reaktionsgeschwindigkeiten entsprechendem Umfang. Solche Novolake sind oft stark trüb und enthalten zudem große Mengen des träger reagierenden und dadurch noch unvollständiger umgesetzten Phenols. Da die träger reagierenden Phenole, z.B. Alkylphenole, einen wesentlich höheren Siedepunkt als das einfache, unsubstituierte Phenol haben, ist ihre Entfernung aus dem Endprodukt nicht oder nur mit sehr großem Aufwand, wie z.B. durch Vakuum-Wasserdampfdestillation, durch Destillation unter extrem hohem Vakuum oder durch Extraktion möglich.

Wie oben ausgeführt, tritt bei der Novolakkondensation im Reaktionsgemisch rasch Phasentrennung ein. Reaktionspartner und Katalysatoren liegen in den verschiedenen Phasen in unterschiedlichen Konzentrationen vor. Dieser Umstand verstärkt die bereits aus den unterschiedlichen Reaktionsgeschwindigkeiten der Phenole resultierenden nachteiligen Bedingungen noch zusätzlich. Der vorliegenden Erfindung lag somit die Aufgabe zugrunde, unter Überwindung der aufgezeigten Schwierigkeiten und Nachteile einen vorteilhaften Verfahrensweg verfügbar zu machen.

Es wurde nun überraschenderweise gefunden, daß man diese Nachteile, die sich sowohl auf die Durchführbarkeit des Verfahrens als auch auf die Qualität des Endproduktes auswirken, vermeiden kann, wenn man ein Verfahren zur Herstellung von Novolaken aus einem oder mehreren Phenolen und einer oder mehreren Oxoverbindungen unter Kondensation der Reaktanten solchermaßen durchführt, daß man die Reaktionspartner, vorzugsweise unter Normaldruck, bei Temperaturen $\geq 110°C$ in Gegenwart von starken Säuren als Katalysator und in Gegenwart von nicht wassermischbaren und/oder nur teilweise wassermischbaren inerten organischen Lösungsmitteln, die vorzugsweise destillierbar sind und insbesondere mit Wasser Azeotrope bilden können, in einem wasserarmen Medium in homogener Phase kondensiert, wobei das wasserarme Medium durch Destillation hergestellt wird.

Gegenstand der Erfindung ist daher ein Verfahren zur Herstellung von Novolaken aus einem Phenol oder mehreren Phenolen und einer Oxoverbindung oder mehreren Oxoverbindungen durch Kondensation der Reaktanten in einem Wasser enthaltenden Medium, dadurch gekennzeichnet, daß die Reaktanten, vorzugsweise unter Normaldruck, in einem wasserarmen Medium in homogener Phase bei Temperaturen von $\geq 110°C$, vorzugsweise zwischen 115 und 200°C, insbesondere zwischen 120 und 160°C, in Gegenwart von nicht wassermischbaren und/oder nur teilweise wassermischbaren inerten organischen Lösungsmitteln und von Säuren als Katalysator unter destillativer Entwässerung kondensiert werden, wobei das wasserarme Medium durch Abdestillieren des Wassers aus dem Reaktionsgemisch, vorzugsweise als Azeotrop mit dem organischen Lösungsmittel, hergestellt bzw. aufrechterhalten wird.

Die gleichzeitige Destillation des Wassers während der Kondensation des Novolaks erfolgt vorteilhaft und bevorzugt als azeotrope Destillation unter Rückführung des Lösungsmittels, vorzugsweise im Umlauf. Im folgenden wird dieses azeotrop destillierende Lösungsmittel auch als Schleppmittel und die Art der Destillation auch als Umlaufdestillation bezeichnet. Als nicht wassermischbare Schleppmittel werden vorzugsweise Aromaten, wie z.B. Toluol, Xylol, Diethylbenzol, und als nur teilweise wassermischbare Schleppmittel werden vorzugsweise die nur teilweise wassermischbaren Alkohole, wie z.B. Butanol, verwendet. Außerdem können in dem Reaktionsgemisch auch hochsiedende organische Lösungsmittel anwesend sein, die wassermischbar, wie z.B. Dimethyl-triethylenglykolether, Ethyleglykolmonobutylether oder Polyethylenglykolether, oder nicht wassermischbar, wie z.B. Di-n-butyltripropylenglykolether, sein können.

Die Durchführung des Verfahrens erfolgt in einem Reaktor, z.B. einem üblichen Kessel oder Glaskolben, der mit Rührer, Heizung, Thermostatisierung, Zulaufvorrichtung, Rückflußkühler und Wasserabscheider ausgestattet ist. Das Phenol oder die Phenole werden gemeinsam mit dem Katalysator und dem Schleppmittel vorgelegt, auf die gewünschte Reaktions- bzw. Destillationstemperatur gebracht und die Oxoverbindung, vorzugsweise z.B. wäßrige Formaldehydlösung, innerhalb weniger Stunden zugegeben. Es kann auch nur ein Teil der Phenole vorgelegt und der Rest gemeinsam mit der Oxoverbindung bei der Reaktionstemperatur zugegeben werden. Sofort nach Zugabe der Oxoverbindung setzt Wasserabscheidung ein, die während des ganzen Zulaufes anhält und wenige Minuten nach Beendigung der Zugabe aufhört. Die Reaktion läuft nicht nur schnell und gut kontrollierbar ab, sondern es erfolgt gleichzeitig auch die Destillation des Wassers, die bei herkömmlichen Verfahren gegebenenfalls im Anschluß an die Kondensationsreaktion durchgeführt wird, was einen zusätzlichen Zeitaufwand erfordert.

Die Aufarbeitung der Reaktionslösung erfolgt erfindungsgemäß durch Destillation. Nachdem das Reaktionswasser und das zum Lösen der Oxoverbindung zusätzlich verwendete Wasser bereits unter Reaktionsbedingungen abgeschieden wurden, wird die verbleibende Lösung aus Novolak, nicht umgesetztem Phenol und Schleppmittel durch Vakuumdestillation aufgearbeitet, wobei die Destillationsbedingungen den Restgehalt an Phenol bestimmen.

Da das Wasser schon während der Reaktion abdestilliert wurde, brauchen zur Aufarbeitung nur noch das Schleppmittel und evtl. die nicht umgesetzten Phenole abdestilliert zu werden. Dadurch verkürzt sich die Verfahrensdauer wesentlich.

Das erfindungsgemäße Verfahren zur Herstellung von Novolaken kann vorteilhaft auch kontinuierlich durchgeführt werden, indem man zu einem ausreagierten, aber noch nicht aufgearbeiteten Reaktionsgemisch die Reaktionspartner in dem erforderlichen Mischungsverhältnis, also Phenole und Oxoverbindungen in Mischung mit Schleppmittel und Katalysator, bei der erfindungsgemäßen Reaktionstemperatur unter fortgesetzter Umlaufdestillation zulaufen läßt und das neu entstehende Reaktionsprodukt kontinuierlich abzieht und aufarbeitet, gegebenenfalls kontinuierlich aufarbeitet.

Während bei Verfahren nach dem Stand der Technik die Reaktionswärme der Novolakbildung durch Kühlung abgeführt bzw. vernichtet werden muß, wird sie bei dem erfindungsgemäßen Verfahren zum Verdampfen des eingebrachten Wassers bzw. des entstehenden Kondensationswassers verwendet. Wenn auch ein Teil der Reaktionswärme zum Verdampfen des zur Umlaufdestillation eingesetzten Schleppmittels verbraucht wird, so ergibt sich trotzdem eine positive und vorteilhafte Energiebilanz.

Im Gegensatz zu bekannten Verfahren wird das in das erfindungsgemäße Verfahren eingebrachte bzw. im Verfahrensverlauf entstehende Wasser kontinuierlich abgeführt und die Kondensationsreaktion findet in einer homogenen Phase statt. Dadurch entfällt z.B. einer der Gründe für das Entstehen eines Energiestaus. Außerdem werden aber, und das ist besonders beim Einsatz verschiedener Phenole wichtig, für alle Reaktionsteilnehmer einheitliche Reaktionsbedingungen hergestellt. Das Vorliegen einer homogenen bzw. einer einheitlichen Phase, deren Beweglichkeit zusätzlich durch höhere Temperaturen und die Anwesenheit von Lösungsmittel erhöht ist, erleichtert die Umsetzung bzw. ermöglicht überhaupt erst eine Durchführung der Kondensationsreaktion in kontinuierlicher Verfahrensweise sowie die gemeinsame Kondensation von z.B. Phenol und Alkylphenolen zu Mischkondensaten.

Die Reaktionsbedingungen des erfindungsgemäßen Verfahrens sind insbesondere durch hohe Reaktionstemperaturen bei druckloser Durchführung, durch die sofortige destillative Entfernung des Kondensationswassers aus dem Gleichgewicht und durch die besonders hohe Wirksamkeit des verwendeten Katalysators gekennzeichnet. Die Nachreaktionszeit ist dadurch sehr kurz und beträgt im allgemeinen nur Bruchteile von Minuten. Dadurch entfällt ein weiterer wesentlicher Grund für die Bildung eines Energiestaus. Als Katalysator werden bevorzugt starke Mineralsäuren und/oder ihre sauren Derivate, insbesondere Schwefelsäure oder ihre sauren Derivate, verwendet. Der Katalysator kann vor der Aufarbeitung des Reaktionsgemisches neutralisiert werden, vorzugsweise mit basischen Metallhydroxiden oder Aminen. Er kann auch im Falle von Schwefelsäure bzw. deren sauren Derivaten durch Zusatz von Terpenen reduktiv gespalten und in Form von $SO_2$ aus dem Reaktionsprodukt entfernt werden. Erfindungsgemäß verläuft die Kondensationsreaktion praktisch quantitativ unter sofortiger Bildung von Alkylidenbrücken. Es läßt sich zeigen, daß sich unter den erfindungsgemäßen Umsetzungsbedingungen die Reaktionsgeschwindigkeiten verschiedener Phenole so stark angleichen, daß die Herstellung echter Cokondensate unschwer erfolgen kann.

Durch das gleichzeitige Entfernen des eingebrachten Wassers und des Reaktionswassers aus dem Reaktionsgemisch kann die Raumausbeute stark erhöht werden. Sie steigt von 40 bis 45 % bei bekannten Verfahren erfindungsgemäß auf 70 bis 80 %. Das erfindungsgemäße Verfahren ist damit nicht nur durch Verbesserung der Zeitausbeute, sondern auch durch Verbesserung der Raumausbeute gekennzeichnet.

Bei der Durchführung des erfindungsgemäßen Verfahrens kann man, ohne Korrosion am Reaktormaterial befürchten zu müssen, starke Säuren als Katalysator verwenden, welche bei vergleichsweise Verwendung in einem Reaktionsmedium mit wäßriger Phase das Reaktormaterial stark angreifen bzw. schädigen würden. Diese starken Säuren, wie z.B. Schwefelsäure, sind sehr wirksame Katalysatoren und brauchen nur in sehr geringer Konzentration, z.B. in Mengen von etwa 0,1 Gew.-%, bezogen auf eingesetztes Phenol, zugesetzt zu werden. Dadurch ist eine weitere Verbesserung der Wirtschaftlichkeit des Verfahrens gegeben. Außer den Katalysatoren für die Kondensationsreaktion können während des Verfahrens auch übliche

EP 0 381 966 B1

andere, die Gebrauchseigenschaften der Endprodukte beeinflussende Substanzen zugegeben werden.

Bei Verwendung flüchtiger, insbesondere wasserdampfflüchtiger, Phenole oder deren Gemischen, insbesondere z.B. das Phenol (Monohydroxybenzol) selbst, wird erfindungsgemäß ein Abwasser erhalten, welches überraschenderweise nur 1 bis 2 Gew.-% Phenol enthält. Die ferner bei der Destillation bzw. Vakuumdestillation anfallende und aus einem Gemisch aus Schleppmittel und Phenol bestehende organische Phase ist dagegen wasserarm und kann ohne weitere Behandlung als Ausgangsprodukt für den nächsten Ansatz wiederverwendet werden. Ihr Gehalt an nicht umgesetzten Oxoverbindungen ist gering. Er liegt im Bereich von 0,05 bis 0,15 Gew.-%, bezogen auf die anfallende organische Phase.

Die Reaktion zwischen Phenolen bzw. deren Gemischen und Oxoverbindungen erfolgt erfindungsgemäß schnell und momentan.

Unter den einzuhaltenden Reaktionsbedingungen sind ferner Methylolgruppen bzw. vergleichbare substituierte bzw. andere reaktive Gruppen weitgehend instabil und setzen sich sofort zu den gewünschten Methylenbrücken um. Somit tritt während des Verfahrensablaufs keine nennenswerte Verschiebung des molekularen Ausgangsverhältnisses der Komponenten ein, woraus eine stark verbesserte Reproduzierbarkeit des Verfahrensproduktes resultiert.

Als Oxoverbindungen kommen prinzipiell alle Aldehyd- und/oder Ketogruppen enthaltenden oder solche Gruppen hervorbringenden Verbindungen infrage, die gegenüber Phenolen, welche am aromatischen Ring reaktive Wasserstoffatome besitzen, reaktiv sein und mit diesen Kondensationsprodukte bilden können. Von den als Ausgangskomponenten verwendbaren Oxoverbindungen, die einzeln oder zu mehreren nacheinander oder im Gemisch eingesetzt werden können, werden bevorzugt Aldehyde, wie Formaldehyd, Acetaldehyd und deren Homologe bzw. Isomeren mit bis zu 18 C-Atomen pro Molekül, insbesondere bis zu 12 C-Atomen pro Molekül, eingesetzt. Besonders bevorzugt ist die Verwendung von wäßrigen Formaldehydlösungen. Es können auch Ketone mit bus zu 18, vorzugweise bis zu 12, C-Atomen verwendet werden. Bevorzugt sind z.B. Aceton, Methylethylketon, Diethylketon und Kampfer.

Als phenolische Komponenten kommen prinzipiell alle phenolischen Verbindungen infrage, die mindestens 1 reaktives Wasserstoffatom am aromatischen Kern besitzen und in ihrer Reaktivität mit Aldehyden mindestens monofunktionell sind. Hierzu zählen z.B. einkernige oder mehrkernige phenolische Verbindungen, die in ihrer Reaktivität mit beispielsweise Formaldehyd monofunktionell, difunktionell, trifuntionell oder auch höherfunktionell sein können. So können die nachfolgend genannten phenolischen Verbindungen z.B. einzeln, zu mehreren nacheinander oder als Gemische eingesetzt werden. Vorzugsweise werden das Phenol selbst (Monohydroxybenzol), die verschiedenen Kresol- und Xylenol-Isomeren, die Isomeren des Ethylphenols, des Propyl- bzw. Isopropylphenols sowie p- bzw. o-substituierte Alkylphenole mit bis zu 18, insbesondere bis zu 15, C-Atomen in der Seitenkette eingesetzt. Es können auch ungesättigte Phenole verwendet werden, wie z.B. o- oder p-Vinylphenol, p-Isopropenylphenol sowie die durch Destillation aus Cashew-Öl erhältlichen $C_{15}$- ungesättigten Alkenylphenole. Für die Durchführung des Verfahrens kommen auch kondensierte Phenole, wie z.B. $\alpha$- oder $\beta$-Naphthol, in Betracht. Die Reaktion kann ferner mit mehrkernigen Phenolen, wie z.B. den Isomeren des Diphenylolmethans, Diphenylolethans, Diphenylolpropans (Bisphenol A), Triphenylolmethans oder Triphenylolethans durchgeführt werden. Mehrwertige Phenole, wie z.B. Resorcin, Brenzcatechin, Hydrochinon und Pyrogallol, sind ebenfalls als Reaktanten vorteilhaft verwendbar.

Während bei den bekannten Verfahren die direkte Mischkondensation zwischen verschieden substituierten Phenolen bzw. unsubstitueirtem Phenol nicht oder nur unvollkommen möglich ist, gleichen sich bei dem erfindungsgemäßen Verfahren die Reaktionsgeschwindigkeiten gegenüber Oxoverbindungen solchermaßen an, daß die Zusammensetzung der eingesetzten Phenole und die der nicht umgesetzten und nach Beendigung der Reaktion übriggebliebenen Phenole im wesentlichen gleich ist. Durch besondere Reaktionsführung ist es erfindungsgemäß sogar möglich, den Gehalt der bei bekannten Verfahren langsamer reagierenden Phenole im Endprodukt weit unter das Maß zu drücken, wie es selbst bei Gleichheit der Reaktionsgeschwindigkeiten möglich wäre.

Die nach dem erfindungsgemäßen Einstufenverfahren erhältlichen Cokondensate entsprechen in ihrer Zusammensetzung weitgehend den Produkten, die man nach dem Stand der Technik bisher nur nach mehrstufigen Verfahren, wie z.B. nach der DE-PS 2235051, erhalten kann. Bei diesem Verfahren des Standes der Technik werden bekanntlich zur Umgehung der ungleichen Reaktionsgeschwindigkeiten von Phenol und p-tert.-Butylphenol zunächst das p-tert.-Butylphenol in die Dimethylolverbindung übergeführt und diese dann gemeinsam mit Phenol und zusätzlichem Formaldehyd zum Novolak kondensiert.

Die Verwendung der nach dem erfindungsgemäßen Verfahren hergestellten Novolake entspricht im wesentlichen derjenigen von nach üblichen Verfahren hergestellten Novolaken. Durch die vielseitige Variationsmöglichkeit des erfindungsgemäßen Verfahrens ist es jedoch möglich, die Eigenschaften der Novolake vielfältig zu variieren und den jeweiligen Erfordernissen noch besser anzupassen. Insbesondere

5

ist es aber nach dem erfindungsgemäßen Verfahren möglich, die bisher nach bekannten Verfahren hergestellten Novolake einfacher, sicherer und mit gleichbleibender Qualität bei sehr guter Reproduzierbarkeit herzustellen. Durch die verfahrensbedingte niedrigere Viskosität des Reaktionsmediums ist es außerdem möglich, Novolake mit höheren Molekulargewichten als nach den bekannten Verfahren zu erhalten.

Die erfindungsgemäß erhältlichen Novolake können z.B. als Verstärkerharze für Gummi und Elastomere verwendet werden. Dazu werden sie gemeinsam oder getrennt mit Vernetzern, wie z.B. Hexamethylentetramin und/oder Aminoplasten und/oder Resolen, gegebenenfalls nach einer Vorreaktion, in die noch nicht vulkanisierte Gummi- bzw. Elastomerenmischung eingearbeitet.

Für die Herstellung von verstärktem Gummi geeignete Kautschuktypen sind beispielsweise Naturkautschuk, Styrol-Butadien-Kautschuk, Polybutadien, Polyisopren, Transpolyoctenylen-Butyl-Kautschuk, Ethylen-Propylen-Dien-Terpolymer-Kautschuk oder deren Gemische, wie sie gewöhnlich in der Reifenindustrie oder zur Herstellung technischer Gummiwaren verwendet werden. Styrol-Butadien und Naturkautschuk oder Mischungen dieser Kautschuktypen mit untergeordneten Mengen an anderen Kautschuktypen sind bevorzugt. Sie können in beliebiger Lieferform, z.B. als Ballen oder Pulver sowie z.B. mit Ruß, Anwendung finden. Geeignet sind ferner auch polare Kautschuke, wie z.B. Nitrilkautschuk (Copolymere von Acrylnitril mit Butadien oder Isopren) oder Polyurethankautschuk. Übliche weitere Zusatzstoffe in der Kautschukmischung sind z.B. Füllstoffe, Vulkanisationsmittel, Beschleuniger, Aktivatoren und Verarbeitungshilfsmittel.

Die unter Mitverwendung von erfindungsgemäß hergestellten Novolaken erhältlichen Vulkanisate können z.B. als technische Gummiwaren, wie Dämpfungselemente, Gummimanschetten, Bälge, Förderbänder, aber auch für Fahrzeugreifen verwendet werden. Dabei kann der Einsatz der Novolak enthaltenden Gummimischungen auch in den Schichten erfolgen, die eine gute Haftung zu eingelegten Geweben oder Geflechten haben müssen. Zur Verbesserung der Haftung kann zusätzlich die Anwendung von Haftvermittlern, wie Kobalt- oder anderen Metallverbindungen, und/oder deren Kombination mit Kieselsäure, Resorcin und Härtungsmitteln erfolgen.

Erfindungsgemäß erhältliche Novolake können auch als Klebrigmacher für Kautschuk, insbesondere für Synthese-Kautschuk, dienen. Bei der Herstellung von Gummiartikeln aus mehreren Lagen, wie es besonders bei der Herstellung von Autoreifen notwendig ist, verfügen die üblichen nichtvulkanisierten Teile oft nicht über die für die Montage erforderliche Klebrigkeit. Das ist besonders dann der Fall, wenn die Kautschukmischung überwiegend oder ausschließlich aus Synthese-Kautschuk aufgebaut ist. Durch Zusatz von Novolaken kann eine ausreichende Erhöhung der Klebrigkeit bewirkt werden.

Für diesen Anwendungszweck der Novolake ist die Mitverwendung von Härtungsmitteln nicht erforderlich, gleichwohl aber möglich.

Weitere Verwendungsmöglichkeiten von erfindungsgemäß erhältlichen Novolaken liegen auf dem Gebiet der Reibbeläge, der Imprägniermittel für organische und/oder anorganische Fasern, der Bindemittel für organische und/oder anorganische Fasern, der Überzüge, Beschichtungen und Lacke sowie der Bindemittel für zerkleinerte, vorzugsweise anorganische Materialien. Bei diesen Anwendungen können die Novolake mit oder ohne Vernetzungsmittel sowie auch mit Füllstoffen, Zusätzen, Pigmenten und anderen Zusatzstoffen verarbeitet und dann gegebenenfalls einer oder mehreren thermischen Nachbehandlungen, gegebenenfalls unter Formgebung, unterzogen werden, wobei die Temperatur auch oberhalb der Zersetzungstemperatur des Novolaks liegen kann.

Die Erfindung wird durch die nachstehenden Beispiele näher erläutert.

**Beispiel 1**

**Herstellung eines Nonylphenol-Formaldehyd-Novolaks**

Der für die Kondensationsreaktion und die Aufarbeitung des Reaktionsgemisches verwendete Reaktor besteht aus einem 2 l-Vierhals-Glaskolben, der mit thermostatisierter Heizung, Rührvorrichtung, Thermometer, Zulaufvorrichtung und Rückflußkühler mit Wasserabscheider versehen ist. Der Wasserabscheider besitzt einen höhenverstellbaren Siphon, der eine kontinuierliche Abtrennung des Wassers ermöglicht.

In den Reaktor werden 660 g Nonylphenol, 120 g Xylol und 28,4 ml 0,5 n Schwefelsäure gegeben und der Wasserabscheider mit Xylol gefüllt. Die Mischung wird am Umlauf bis zu einer Temperatur von 150°C erhitzt. Dabei scheidet sich das durch den Katalysator eingebrachte Wasser ab. Nun läßt man bei 150°C 243 g einer 37 gew.-%igen, wäßrigen Formaldehydlösung gleichmäßig, über 3 Stunden verteilt, zulaufen. Sofort nach Beginn der Formaldehyd-Dosierung setzt Wasserabscheidung ein. 1 Minute nach Beendigung des Formaldehydzulaufes ist die Wasserabscheidung beendet.

Anschließend gibt man dem Reaktionsgemisch 14,2 ml 0,5 n Natronlauge zu und entfernt das mit der Natronlauge eingebrachte Wasser destillativ am Umlauf. Insgesamt fallen 249 g wäßrige Phase mit einem

6

Formaldehydgehalt von 0,15 Gew.-% und einem Xylolgehalt von 0,2 Gew.-%, bezogen auf die wäßrige Phase, an. Die Aufarbeitung der erhaltenen Novolaklösung erfolgt anschließend, wie auch bei den weiteren Beispielen, wie folgt: Rückflußkühler und Wasserabscheider werden durch einen absteigenden Kühler mit Vorlage ersetzt. Man destilliert nun zunächst unter Normaldruck bis 210°C und dann unter einem Vakuum von 60 mbar 1 Stunde bei 210°C die flüchtigen Bestandteile ab.

Es werden 115 g Rückxylol erhalten. Im Reaktorkolben verbleiben 697 g eines Nonylphenolnovolaks mit einem Schmelzpunk (Fp.) von 96°C und einer Viskosität von 71 mPa•s/gemessen bei 20°C (1:1 in Xylol).

**Vergleichsbeispiel 1**

**Herstellung eines Nonylphenol-Formaldehyd-Novolaks**

Es wird für dieses nicht erfindungsgemäße Vergleichsbeispiel als Reaktor ein 2 l-Vierhals-Glaskolben verwendet, der mit thermostatisierbarer Heizung, Kühlvorrichtung, Thermometer, Rührer, Zulaufvorrichtung und Rückflußkühler ohne Wasserabscheider ausgestattet ist.

In den Glaskolben werden 660 g Nonylphenol und 13,2 g Oxalsäure-dihydrat gegeben, die Mischung auf 100°C gebracht und innerhalb von 1 Std. 243 g einer wäßrigen, 37 gew.-%igen Formaldehydlösung zugegeben. Anfangs muß gekühlt werden. Nach 12-stündigem Rühren bei 100°C sinkt der Gehalt an freiem Formaldehyd auf 1,2 Gew.-% ab. Nach weiterem 2-stündigem Rühren bleibt der Formaldehydgehalt bei diesem Wert stehen.

Die Aufarbeitung des Reaktionsgemisches erfolgt wie im Beispiel 1 beschrieben.

Es werden bei der destillativen Aufarbeitung 198 g einer wäßrigen Phase mit einem Restformaldehydgehalt von 2,2 Gew.-% erhalten.

Im Reaktorkolben verbleiben 681 g eines Nonylphenolnovolaks mit einem Schemlzpunkt (Fp.) von 58°C und einer Viskosität von 15 mPa•s/gemessen bei 20°C (1:1 in Xylol).

**Beispiel 2**

**Herstellung eines Phenol-Formaldehyd-Novolaks**

Es werden in dem in Beispiel 1 beschreibenen Reaktor 940 g Phenol, 40 g Xylol und 40 ml 0,5 n Schwefelsäure vorgelegt und der Wasserabscheider mit 86 g Xylol gefüllt. Die Mischung wird unter Rühren auf 125°C erwärmt und es werden bei dieser Temperatur, über 3 Stdn. gleichmäßig verteilt, 616 g einer wäßrigen, 37 gew.-%igen Formaldehydlösung zugetropft. 5 min. nach Beendigung des Formaldehydzulaufes werden 20 ml 0,5 n Natronlauge zugegeben und bis zu einer Sumpftemperatur von 170°C das (aus der NaOH stammende) Wasser abgetrennt. Es fallen 607,8 g wäßrige Phase mit einem Formaldehydgehalt von 0,12 Gew.-% und einem Phenolgehalt von 1,7 Gew.-% an.

Bei der destillativen Aufarbeitung der erhaltenen entwässerten Novolaklösung werden, wie in Beispiel 1 beschrieben, zusammen mit dem Inhalt des Wasserabscheiders 209,2 g eines Destillates erhalten, welches 59 Gew.-% Xylol, 39,8 Gew.-% Phenol, 0,5 Gew.-% Wasser und 0,01 Gew.-% Formaldehyd enthält. Im Reaktorkolben verbleiben 913 g eines Phenol-Formaldehyd-Novolaks, der noch 0.7 Gew.-% nicht umgesetztes Phenol enthält. Der Erweichungspunkt (Fp.) des Novolaks liegt bei 92°C und die Viskosität beträgt 2790 mPa•s/gemessen bei 20°C (1:1 in Methoxypropanol).

**Beispiel 3**

**Herstellung eines p-Isooctylphenol-Phenol-Formaldehyd-Novolaks**

Es werden in dem in Beispiel 1 beschriebenen Reaktor 303 g p-Isooctylphenol, 415 g Phenol, 120 g Xylol und 30,9 ml 0,5 n Schwefelsäure vorgelegt, der Wasserabscheider mit Xylol gefüllt und der Ansatz auf 130°C gebracht. Dann läßt man innerhalb von 3,5 Stdn. 381 g einer 37 gew.-%igen wäßrigen Formaldehydlösung zulaufen. 10 min. nach Beendigung der Formaldehydzugabe wird das Reaktionsgemisch mit 15,45 ml 0,5 n Natronlauge neutralisiert und bei bis auf 170°C ansteigender Temperatur destillativ entwässert. Das Reaktionsprodukt enthält 5,19 Gew.-% nicht umgesetztes Phenol und 4 Gew.-% nicht umgesetztes Octylphenol. Nach der destillativen Aufarbeitung, wie in Beispiel 1 beschrieben, verbleiben 728 g eines p-Isooctylphenol-Phenol-Formaldehyd-Novolaks, der 5 Gew.-% nicht umgesetztes p-Isooctylphenol und 0,5 Gew.-% nicht umgesetztes Phenol enthält. Der Schmelzpunkt (Fp.) des Novolaks liegt bei 90°C und die Viskosität beträgt 1850 mPa•s/gemessen bei 20°C (1:1 in Methoxypropanol).

**Beispiel 4**

**Herstellung eines p-Isooctylphenol-Phenol-Formaldehyd-Novolaks**

Es wird wie im Beispiel 3 beschrieben verfahren und es werden dabei 515 g p-Isooctylphenol, 235 g Phenol, 324 g einer wäßrigen, 37 gew.-%igen Formaldehydlösung, 32,3 ml 0,5 n Schwefelsäure und 16,2 ml 0,5 n Natronlauge verwendet. Nach der destillativen Entwässerung bei 170°C enthält das Reaktionsprodukt 2,87 Gew.-% nicht umgesetztes Phenol und 5,9 Gew.-% nicht umgesetztes p-Isooctylphenol.

Nach der destillativen Aufarbeitung des Reaktionsproduktes, wie in Beispiel 1 beschrieben, werden 776 g eines p-Isooctylphenol-Phenol-Formaldehyd-Novolak erhalten, der 7 Gew.-% nicht umgesetztes p-Isooctylphenol und 0,3 Gew.-% nicht umgesetztes Phenol enthält. Der Schmelzpunkt (Fp.) des Novolaks liegt bei 82°C und die Viskosität beträgt 639 mPa•s/gemessen bei 20°C (1:1 in Methoxypropanol).

**Vergleichsbeispiel 2**

**Mischkondensation von p-Isooctylphenol und Phenol mit Formaldehyd**

Diese nicht erfindungsgemäße Vergleichsbeispiel erfolgt vergleichsweise zu Beispiel 3.

Es werden in dem im Vergleichsbeispiel 1 beschriebenen Reaktor eine Mischung aus 257,5 g p-Isooctylphenol, 352,5 g Phenol und 12,5 g Oxalsäure-dihydrat vorgelegt und die Mischung auf 100°C erwärmt. Bei dieser Temperatur werden innerhalb von 1 std. 324 g einer wäßrigen, 37 gew.-%igen Formaldehydlösung zugegeben. Dabei wird das Reaktionsgemisch durch intermittierende Kühlung und Heizung auf 100°C gehalten. 20 min. nach Beginn der Formaldehydzugabe tritt Phasentrennung ein. Das Reaktionsgemisch wird nach Beendigung der Formaldehydzugabe noch 7 Stdn. am Rückfluß gekocht, wonach der Formaldehydgehalt auf 0,1 Gew.-% abgesunken ist. Nach intensivem Rühren wird eine Probe gezogen zur Bestimmung von nicht umgesetztem Phenol und von nicht umgesetztem p-Isooctylphenol. Die Probe enthält 6,1 Gew.-% nicht umgesetztes p-Isooctylphenol und 1,8 Gew.-% nicht umgesetztes Phenol. Nach der destillativen Aufarbeitung des Reaktionsproduktes, wie in Beispiels 1 beschrieben, verbleiben im Reaktorkolben 641 g eines in sich trüben Harzes mit einem Schmelzpunkt (Fp.) von 71°C und einer Viskosität von 750 mPa•s/gemessen bei 20°C (1:1 in Methoxypropanol).

Der Gehalt des harzes an nicht umgesetztem p-Isooctylphenol beträgt 9 Gew.-%, der Gehalt an nicht umgesetztem Phenol 0,3 Gew.-%.

**Vergleichsbeispiel 3**

**Mischkondensation von p-Isooctylphenol und Phenol mit Formaldehyd**

Dieses nicht erfindungsgemäße Vergleichsbeispiel erfolgt vergleichsweise zu Bespiel 4.

Es wird wie im Vergleichsbeispiel 2, aber mit folgender Abänderung verfahren.

Es werden 515 g p-Isooctylphenol, 235 g Phenol, 15 g Oxalsäure-dihydrat und 324 g einer wäßrigen, 37 gew.-%igen Formaldehydlösung verwendet und das Reaktionsgemisch wird nach Beendigung der Formaldehydzugabe 12 Stdn. am Rückfluß gerührt. Der Gehalt des Reaktionsproduktes an freiem Formaldehyd beträgt dann 0,2 Gew.-%.

Eine zu dieser Zeit dem Reaktionsprodukt entnommene Probe weist einen Gehalt von 1,65 Gew.-% freiem Phenol und 10,4 Gew.-% freiem p-Isooctylphenol auf. Nach der destillativen Aufarbeitung des Reaktionsproduktes, wie in Beispiel 1 beschrieben, fallen 780 g eines in sich trüben Harzes mit einem Schmelzpunkt (Fp.) von 53°C und einer Viskosität von 330 mPa•s/gemessen bei 20°C (1:1 in Methoxypropanol) an. Der Gehalt des Harzes an freiem Phenol beträgt 0,4 Gew.-%, der Gehalt an freiem p-Isooctylphenol beträgt 14,6 Gew.-%.

**Beispiel 5**

**Herstellung eines p-Isooctylphenol-Phenol-Formaldehyd-Novolaks**

Es werden in dem in Beispiel 1 beschriebenen Reaktor 309 g Isooctylphenol, 120 g Xylol und 35 ml 0,5 n Schwefelsäure vorgelegt, der Wasserabscheider mit Xylol gefüllt und der Ansatz auf 140°C gebracht. Danach läßt man innerhalb von 30 min. 61 g einer wäßrigen, 37 gew.-%igen Formaldehydlösung zulaufen. Wenn der Zulauf beendet ist, gibt man innerhalb von 3 Stdn., gleichmäßig verteilt, eine Mischung aus 529 g Phenol und 323,5 g einer wäßrigen, 37 gew.-%igen Formaldehydlösung zu. 5 min. nach Beendigung des Zulaufes wird das Reaktionsgemisch mit 17,5 ml 0,5 n Natronlauge neutralisiert und destillativ, wie in Beispiel 1 beschrieben, aufgearbeitet. Im Reaktorkolben verbleiben 728 g eines p-Isooctylphenol-Phenol-Formaldehyd-Novolaks mit einem Schmelzpunkt (Fp.) von 85°C und einer Viskosität von 3140 mPa•s/gemessen bei 20°C (1:1 in Methoxypropanol).

Der Gehalt des Novolaks an nicht umgesetztem p-Isooctylphenol beträgt 0,5 Gew.-%, der Gehalt an nicht umgesetztem Phenol beträgt 0,6 Gew.-%.

### Beispiel 6

### Herstellung eines n-Butyraldehyd-Phenol-Novolaks

Es werden in dem in Beispiel 1 beschriebenen Reaktor 815 g Phenol, 167 g Toluol und 0,9 g konzentrierte Schwefelsäure vorgelegt, der Wasserabscheider mit Toluol gefüllt und bei 120°C während 6 Stdn., gleichmäßig verteilt, 394 g n-Butyraldehyd (25 gew.-%ig wäßrig) zugegeben. Es scheiden sich im Wasserabscheider 110 g wäßrige Phase mit einem Gehalt von 0,12 Gew.-% n-Butyraldehyd und 0,2 Gew.-% Toluol ab. Vor der destillativen Aufarbeitung werden dem Reaktionsgemisch 22 g Kolophonium zugegeben. Nach der destillativen Aufarbeitung, wie in Beispiel 1 beschrieben, verblieben im Reaktorkolben 933 g eines n-Butyraldehyd-Phenol-Novolaks mit einem Schemlzpunkt (Fp.) von 60°C und einer Viskosität von 280 mPa•s/gemessen bei 20°C (1:1 in Methoxypropanol).

### Beispiel 7

### Kontinuierliche Herstellung eines Phenol-Formaldehyd-Novolaks

Der 2 l-Vierhals-Glasrundkolben des im Beispiel 1 beschreibenen Reaktors wird zusätzlich mit einem Bodenablauf von 18 mm lichter Weite, der durch den Heizmantel geführt wird und als Schliffkern endet, ausgestattet. Auf diesen Schliffkern wird mit Schliffhülse ein S-förmig gebogenes Glasrohr, gleichfalls mit 18 mm lichter Weite, gesteckt, welches als Siphon wirkt. Der Siphon ist in seinem unteren, horizontalen Teil durch einen Kugelschliffkern und eine Kugelschliffhülse beweglich gemacht, so daß sich der Siphon durch seitliches Neigen zur Höhenstandsregulierung des Inhalts im Glaskolben des Reaktors verwenden läßt. Die Gesamtlänge von Bodenablauf und Siphon beträgt 42 cm. Der Siphon ist von einem Heizmantel umgeben.

In dem Reaktor wird eine entwässerte, analog dem Beispiel 2 hergestellte und noch nicht aufgearbeitete Novolaklösung vorgelegt, die aus 940 g Phenol, 150 g Xylol und 583 g einer wäßrigen, 37 gew.-%igen Formaldehydlösung in Gegenwart von 50 ml 0,5 n Schwefelsäure hergestellt wurde und eine Temperatur von 140°C besitzt.

Vor dem Einfüllen der Novolaklösung wird der Siphon über eine Thermostatpumpe auf 140°C temperiert. Die eingefüllte Novolaklösung wird auf einer Temperatur von 140°C gehalten und ihr Niveau im Glaskolben so einreguliert, daß aus dem Siphon gerade noch nichts überlaufen bzw. auslaufen kann. Der kontinuierliche Wasserabscheider am Rückflußkühler wird mit Xylol gefüllt. Bei 140°C läßt man nun unter Rühren in die vorgelegte Novolaklösung eine Reaktantenmischung mit einer Geschwindigkeit von 450 g/Std. kontinuierlich zulaufen, wobei in der Reaktantenmischung die Komponenten anteilig im Mischungsverhältnis von 940 g Phenol, 150 g Xylol, 0,98 g konzentrierte Schwefelsäure und 583 g wäßrige, 37 gew.-%ige Formaldehydlösung enthalten sind. Der hinter dem Siphon befindliche Auffangbehälter füllt sich hierbei fortlaufend durch stündiges Auslaufen von Reaktionsgemisch aus dem Siphon mit der kontinuierlich entstehenden Novolaklösung nach Maßgabe des Zulaufs des Reaktantengemisches in den Reaktor. Der Auffangbehälter wird alle 2 Stdn. gewechselt, sein Inhalt jeweils mit 10 g Kolophonium versetzt und, wie in Beispiel 1 beschrieben, jedoch bei 190°C statt bei 210°C, destillativ aufgearbeitet, was diskontinuierlich oder gegebenenfalls kontinuierlich durchgeführt wird, und der erhaltene Novolak isoliert.

Die Mengen der nach jeweils 2 Stdn. dem Auffangbehälter entnommenen Novolaklösungen und der gleichzeitig im Wasserabscheider isolierten wäßrigen Destillate einschließlich deren Gehalten an nicht umgesetzten Ausgangskomponenten, und zwar der Formaldehydgehalt in der Novolaklösung (Gew.-% $CH_2O$, bezogen auf die Novolaklösung) sowie der Formaldehydgehalt und der Phenolgehalt in dem wäßrigen Destillat (Gew.-% $CH_2O$ bzw. Gew.-% Phenol, jeweils bezogen auf das wäßrige Destillat), sind in der Tabelle 1 zusammengefaßt wiedergegeben, ebenso auch die aus den einzelnen Novolaklösungen nach deren destillativer Aufarbeitung jeweils erhaltene Menge an Novolak einschließlich seinem Schmelzpunk (Fp. in °C), seiner Viskosität (in mPa•s, gemessen 1:1 in Methoxypropanol bei 20°C) und seines Gehaltes an nicht umgesetztem Ausgangs-Phenol (Gew.-% Phenol, bezogen auf den Novolak).

**Tabelle 1**

Kontinuierliche Herstellung eines Phenol-Formaldehyd-Novolaks

| Isolierung der Novolaklösung in den Vorlagen Nr. 1 bis 5 jeweils in Zweistundenintervallen aus kontinuierlicher Reaktion bei 140°C | | | | Aus dem Wasserabscheider nach dem jeweiligen Zweistundenintervall abgetrenntes Wasser | | | Nach destillativer Aufarbeitung der Novolaklösung jeweils erhaltener Novolak | | | |
|---|---|---|---|---|---|---|---|---|---|---|
| Probe in Vorlage Nr. | Gesamte Reaktionslaufzeit beim jeweiligen Vorlagen-Wechsel (Stunden) | Probenmenge (g) | $CH_2O$-Gehalt (Gew.-%) | Wassermenge (g) | $CH_2O$-Gehalt (Gew.-%) | Phenolgehalt (Gew.-%) | Menge (g) | Phenolgehalt (Gew.-%) | Fp. (°C) | Viskosität, gemessen 1:1 in Methoxypropanol bei 20°C |
| 1 | 2 | 630 | 0,05 | 260 | 0,1 | 1,8 | 470 | 2,4 | 81 | 1360 mPa·s |
| 2 | 4 | 650 | 0,1 | 255 | 0,05 | 2,1 | 460 | 2,3 | 79 | 1280 " |
| 3 | 6 | 640 | 0,12 | 260 | 0,1 | 2,0 | 465 | 1,8 | 80 | 1320 " |
| 4 | 8 | 620 | 0,05 | 250 | 0,1 | 2,0 | 450 | 2,5 | 77 | 1200 " |
| 5 | 10 | 650 | 0,05 | 250 | 0,1 | 2,0 | 475 | 2,1 | 79 | 1300 " |

**Patentansprüche**

1. Verfahren zur Herstellung von Novolaken aus einem Phenol oder mehreren Phenolen und einer Oxoverbindung oder mehreren Oxoverbindungen durch Kondensation der Reaktanten in einem Wasser enthaltenden Medium, dadurch gekennzeichnet, daß die Reaktanten in homogener Phase bei Temperaturen von ≥ 110 °C in Gegenwart von nicht wassermischbaren und/oder nur teilweise wassermischbaren inerten organischen Lösungsmitteln und von Säuren als Katalysator unter destillativer Entwässerung kondensiert werden.

2. Verfahren nach Anspruch 1, dadurch gekennzeichnet, daß die destillative Entwässerung durch azeotrope Destillation unter Abtrennung des Wassers und Rückführung des organischen Lösungsmittels durchgeführt wird.

3. Verfahren nach Anspruch 1 und/oder 2, dadurch gekennzeichnet, daß als Oxoverbindungen $(C_1-C_{18})$-Aldehyde verwendet werden.

4. Verfahren nach Anspruch 3, dadurch gekennzeichnet, daß als Oxoverbindung wäßriger Formaldehyd verwendet wird.

5. Verfahren nach einem oder mehreren der Ansprüche 1 bis 4, dadurch gekennzeichnet, daß als Katalysator eine starke Säure und/oder deren saure Derivate verwendet werden.

6. Verfahren nach Anspruch 5, dadurch gekennzeichnet, daß als Katalysator Schwefelsäure und/oder ihre sauren Derivate verwendet werden.

7. Verfahren nach einem oder mehreren der Ansprüche 1 bis 6, dadurch gekennzeichnet, daß die als Katalysator verwendete Säure nach Beendigung der Kondensationsreaktion neutralisiert wird.

8. Verfahren nach einem oder mehreren der Ansprüche 1 bis 6, dadurch gekennzeichnet, daß die als Katalysator eingesetzte Schwefelsäure und/oder ihre sauren Derivate nach Beendigung der Kondensationsreaktion durch Umsetzung mit Terpenen reduktiv eliminiert werden.

9. Verfahren nach einem oder mehreren der Ansprüche 1 bis 8, dadurch gekennzeichnet, daß das Verfahren kontinuierlich durchgeführt wird.

10. Verwendung der Novolake, hergestellt nach Ansprüchen 1 bis 9, als Verstärkerharze für Gummi und/oder Elastomere gemeinsam oder getrennt mit Vernetzern.

11. Verwendung der Novolake, hergestellt nach Ansprüchen 1 bis 9, als Klebrigmacher für Kautschuk.

12. Verwendung der Novolake, hergestellt nach Ansprüchen 1 bis 9, als Bindemittel für Reibbeläge gemeinsam mit Vernetzern, zusammen mit anorganischen und/oder organischen Fasern und gegebenenfalls Füllstoffen und gegebenenfalls Kautschuken.

13. Verwendung der Novolake, hergestellt nach Ansprüchen 1 bis 9, als Bindemittel für härtbare Formmassen gemeinsam mit Vernetzern, gegebenenfalls gemeinsam mit anorganischen und/oder organischen Fasern und gegebenenfalls Füllstoffen und gegebenenfalls Kautschuken.

14. Verwendung der Novolake, hergestellt nach Ansprüchen 1 bis 9, als Imprägniermittel für flächige oder räumliche Gebilde gemeinsam mit Vernetzern, wobei sie gegebenenfalls als Lösung auf die zu imprägnierenden Gebildesubstrate aufgebracht und vernetzt und die Gebilde gegebenenfalls gleichzeitig geformt werden.

15. Verwendung der Novolake, hergestellt nach Ansprüchen 1 bis 9, als Bindemittel für Beschichtungen und Lacke gemeinsam mit Vernetzern, gegebenenfalls in Lösung oder als Harzschmelze, gegebenenfalls gemeinsam mit Plastifizierungsmitteln, Pigmenten und Füllstoffen.

16. Verwendung der Novolake, hergestellt nach Ansprüchen 1 bis 9, als Bindemittel für zerkleinerte, anorganische Substrate, mit oder ohne Vernetzungsmittel und, nach Vermischung mit den Substraten, einer oder mehreren thermischen Nachbehandlungen, gegebenenfalls unter Formgebung, wobei die Temperatur auch oberhalb der Zersetzungstemperatur des Novolaks liegen kann.

**Claims**

1. A process for the preparation of novolaks from a phenol or a plurality of phenols and an oxo compound or a plurality of oxo compounds by condensation of the reactants in a water-containing medium, which comprises condensing the reactants in homogeneous phase at temperatures of $\geq 110\ °C$, in the presence of water-immiscible and/or only partially water-miscible inert organic solvents and of acids as a catalyst, with removal of water by distillation.

2. The process as claimed in claim 1 wherein the distillative removal of water is performed by azeotropic distillation with the separation of water and recycling of the organic solvent.

3. The process as claimed in claim 1 and/or 2, wherein the oxo compounds used are $(C_1$-$C_{18})$-aldehydes.

4. The process as claimed in claim 1 and/or 2, wherein the oxo compound used is aqueous formaldehyde.

5. The process as claimed in one or several of claims 1 to 4, wherein the catalyst used is a strong acid and/or an acidic derivative thereof.

6. The process as claimed in claim 5 wherein the catalyst used is sulfuric acid and/or the acidic derivatives thereof.

7. The process as claimed in one or several of claims 1 to 6, wherein the acid used as catalyst is neutralized at the end of the condensation reaction.

8. The process as claimed in one or several of claims 1 to 6, wherein the sulfuric acid used as catalyst and/or its acidic derivatives are eliminated at the end of the condensation by reductive reaction with terpenes.

9. The process as claimed in one or several of claims 1 to 6, wherein the process is carried out continuously.

10. The use of the novolaks prepared as claimed in claims 1 to 9 as reinforcing resins for rubber and/or elastomers, together with or separately from crosslinking agents.

11. The use of the novolaks prepared as claimed in claims 1 to 9 as tackifiers for rubber.

12. The use of the novolaks prepared as claimed in claims 1 to 9 as binders for friction linings, together with crosslinking agents, together with inorganic and/or organic fibers and optionally fillers and optionally rubbers.

13. The use of the novolaks prepared as claimed in claims 1 to 9 as binders for curable molding compositions, together with crosslinking agents, optionally together with inorganic and/or organic fibers and optionally fillers and optionally rubbers.

14. The use of the novolaks prepared as claimed in claims 1 to 9 as impregnating agents for two-dimensional or three-dimensional shaped articles, together with crosslinking agents, the novolaks optionally being applied as solutions to the shaped article substrates to be impregnated and crosslinked and the shaped articles optionally being shaped simultaneously.

15. The use of the novolaks prepared as claimed in claims 1 to 9 as binders for coatings and paints, together with crosslinking agents, optionally in solution or as resin melts, optionally together with plasticizing agents, pigments and fillers.

16. The use of the novolaks prepared as claimed in claim 1 to 9 as binders for comminuted inorganic substrates, with or without crosslinking agents, and, after mixing with the substrates, one or more subsequent heat treatments, optionally with shaping, it also being possible for the temperature to be above the decomposition temperature of the novolak.

# EP 0 381 966 B1

## Revendications

1. Procédé de préparation de novolaques à partir d'un phénol ou de plusieurs phénols et d'un composé ou de plusieurs composés Oxo, par condensation des corps devant réagir dans un milieu contenant de l'eau, procédé caractérisé en ce que les corps destinés à réagir sont soumis à condensation en phase homogène à des températures supérieures ou égales à 110°C en présence de solvants inertes organiques non miscibles à l'eau et/ou miscibles partiellement seulement à l'eau et en présence d'acides comme catalyseurs, avec enlèvement de l'eau par distillation.

2. Procédé selon la revendication 1, caractérisé en ce que l'enlèvement de l'eau par distillation est réalisé par distillation d'un azéotrope avec séparation de l'eau et recyclage du solvant organique.

3. Procédé selon la revendication 1 et/ou 2, caractérisé en ce qu'on utilise comme composés oxo des aldéhydes en $C_1$ à $C_{18}$.

4. Procédé selon la revendication 3, caractérisé en ce qu'on utilise comme composé oxo du formaldéhyde aqueux.

5. Procédé selon une ou plusieurs des revendications 1 à 4, caractérisé en ce qu'on utilise comme catalyseurs un acide fort et/ou ses dérivés acides.

6. Procédé selon la revendication 5, caractérisé en ce qu'on utilise comme catalyseur de l'acide sulfurique et/ou ses dérivés acides.

7. Procédé selon une ou plusieurs des revendications 1 à 6, caractérisé en ce qu'après l'achèvement de la réaction de condensation, on neutralise l'acide utilisé comme catalyseur.

8. Procédé selon une ou plusieurs des revendications 1 à 6, caractérisé en ce qu'après achèvement de la réaction de condensation, on élimine par réduction l'acide sulfurique et/ou ses dérivés acides, ayant servi de catalyseurs, en le ou les faisant réagir avec des terpènes.

9. Procédé selon une ou plusieurs des revendications 1 à 8, caractérisé en ce que le procédé est réalisé en continu.

10. Utilisation des novolaques, préparées selon les revendications 1 à 9, comme résine d'armature de renforcement pour du caoutchouc et/ou pour des élastomères, avec utilisation simultanée ou séparément d'agents de réticulation.

11. Utilisation des novolaques, préparées selon les revendications 1 à 9, pour rendre collant du caoutchouc.

12. Utilisation des novolaques, préparées selon les revendications 1 à 9, comme liant pour des revêtements de friction ou anti-patinage, utilisation réalisée avec des agents de réticulation, avec des fibres minérales et/ou organiques et éventuellement des matières de charge et éventuellement des caoutchoucs.

13. Utilisation des novolaques, produites selon les revendications 1 à 9, comme liant pour des compositions durcissables à mouler, utilisation effectuée avec des agents de réticulation, éventuellement avec des fibres minérales et/ou organiques et éventuellement avec des matières de charge et éventuellement avec des caoutchoucs.

14. Utilisation des novolaques, préparées selon les revendications 1 à 9, comme milieu d'imprégnation pour des objets plats ou volumineux, utilisation effectuée avec des agents de réticulation, les novolaques étant éventuellement appliquées sous forme d'une solution sur les objets à imprégner à titre de substrat et étant réticulées, et les objets étant éventuellement soumis simultanément à formage ou moulage.

13

**15.** Utilisation des novolaques, préparées selon les revendications 1 à 9, comme liant pour des revêtements et des laques ou vernis, avec des agents de réticulation, éventuellement en solution ou sous forme de masse de résine fondue, éventuellement avec des agents de plastification, des pigments et des matières de charge.

**16.** Utilisation des novolaques, produites selon les revendications 1 à 9, comme liant pour des substrats organiques fragmentés, avec ou sans agent de réticulation et, après mélangeage avec les substrats, réalisation d'un ou plusieurs post-traitement(s) thermique(s), éventuellement avec formage ou moulage, la température pouvant également se situer au-dessus de la température de décomposition de la novolaque.